# EUROPÄISCHE PATENTSCHRIFT

(11) **EP 4 381 179 B1**
(45) Veröffentlichungstag und Bekanntmachung des Hinweises auf die Patenterteilung: **05.11.2025**
(21) Anmeldenummer: 23702101.9
(22) Anmeldetag: 25.01.2023
(51) Int. Cl.: F01N 3/34, F15D 1/00, F16K 15/00, F16L 55/02

(54) **VERBRENNUNGSKRAFTMASCHINE FÜR EIN KRAFTFAHRZEUG, INSBESONDERE FÜR EINEN KRAFTWAGEN**
INTERNAL COMBUSTION ENGINE FOR A MOTOR VEHICLE, IN PARTICULAR FOR A CAR
MOTEUR À COMBUSTION INTERNE POUR VÉHICULE AUTOMOBILE, EN PARTICULIER POUR VOITURE

(30) Priorität: 03.02.2022 DE 102022000415
(43) Veröffentlichungstag der Anmeldung: 12.06.2024
(73) Patentinhaber: Mercedes-Benz Group AG, 70372 Stuttgart (DE)
(72) Erfinder: SCHROEER, Dietmar, 71554 Weissach im Tal (DE)
(74) Vertreter: Novagraaf Group
(86) Internationale Anmeldenummer: PCT/EP2023/051814
(87) Internationale Veröffentlichungsnummer: WO 2023/148065

(56) Entgegenhaltungen:
- DE-A1- 102019 217 473
- JP-U- S6 032 516
- US-A- 4 224 792
- US-A1- 2019 101 230

## Beschreibung

Die Erfindung betrifft eine Verbrennungskraftmaschine für ein Kraftfahrzeug, insbesondere für einen Kraftwagen, gemäß dem Oberbegriff von Patentanspruch 1.

Die DE 10 2019 217 473 A1 offenbart eine Brennkraftmaschine, mit einem Primärluftsystem zur Bereitstellung von Frischluft. Vorgesehen ist auch ein Sekundärluftsystem, welches eingerichtet ist, Sekundärluft von dem Primärluftsystem abzuzweigen und in einen Abgaskanal einzublasen. Der US 1 329 559 ist eine Leitung als bekannt zu entnehmen. Des Weiteren offenbart die DE 10 2018 107 436 A1 eine Verbrennungskraftmaschine mit einer Abgasrückführung und mit einem Rückführventil zur Steuerung der Menge des rückzuführenden Abgases in den Frischluftstrang. Außerdem ist aus der DE 10 2018 106 679 A1 ein Verfahren zum Betreiben einer Brennkraftmaschine bekannt. Ferner ist aus der JP S60 32516 U eine Verbrennungskraftmaschine mit einem Sekundärluftsystem bekannt. Der US 4 224 792 A ist ebenfalls eine Verbrennungskraftmaschine mit einer Sekundärlufteinblasung als bekannt zu entnehmen. Außerdem ist aus der US 2019/101230 A1 eine Einrichtung zum Steuern der Bewegung von Materie bekannt.

Aufgabe der vorliegenden Erfindung ist es, eine Verbrennungskraftmaschine für ein Kraftfahrzeug zu schaffen, so dass eine besonders vorteilhafte Sekundärlufteinblasung realisiert werden kann.

Diese Aufgabe wird durch eine Verbrennungskraftmaschine mit den Merkmalen des Patentanspruchs 1 gelöst. Vorteilhafte Ausgestaltungen mit zweckmäßigen Weiterbildungen der Erfindung sind in den übrigen Ansprüchen angegeben.

Die Erfindung betrifft eine auch als Motor oder Verbrennungsmotor bezeichnete und beispielsweise als Hubkolbenmotor ausgebildete Verbrennungskraftmaschine für ein Kraftfahrzeug, insbesondere für einen Kraftwagen und ganz insbesondere für einen Personenkraftwagen. Dies bedeutet, dass das Kraftfahrzeug in seinem vollständig hergestellten Zustand die Verbrennungskraftmaschine aufweist und mittels der Verbrennungskraftmaschine antreibbar ist. Die Verbrennungskraftmaschine weist einen von Abgas der Verbrennungskraftmaschine durchströmbaren Abgastrakt auf. Beispielsweise in einem befeuerten Betrieb der Verbrennungskraftmaschine laufen in der Verbrennungskraftmaschine, insbesondere in Brennräumen der Verbrennungskraftmaschine, Verbrennungsvorgänge ab. Bei dem jeweiligen Verbrennungsvorgang wird ein einfach auch als Gemisch bezeichnetes Kraftstoff-Luft-Gemisch verbrannt, woraus das Abgas resultiert. Das Abgas kann aus dem jeweiligen Brennraum ausströmen, in den Abgastrakt einströmen und den Abgastrakt durchströmen. Die Verbrennungskraftmaschine weist auch ein Sekundärluftsystem auf, mittels welchem, wie im Folgenden noch genauer erläutert wird, eine Sekundärlufteinblasung durchführbar ist. Das Sekundärluftsystem weist eine Sekundärluftleitung auf, welche von Luft als Sekundärluft in einer Einblasrichtung durchströmbar ist, wodurch die die Sekundärluftleitung in die Einblasrichtung durchströmende Sekundärluft in den Abgastrakt einleitbar ist. Mit anderen Worten, die Sekundärlufteinblasung umfasst, dass die Sekundärluft die Sekundärluftleitung in die Einblasrichtung durchströmt und somit mittels der Sekundärluftleitung in den Abgastrakt eingeleitet wird, was auch als Einblasen der Sekundärluft bezeichnet wird. Somit strömt die die Sekundärluftleitung in die Einblasrichtung durchströmende Sekundärluft in Richtung des Abgastrakts beziehungsweise zu dem Abgastrakt hin. Insbesondere wird die Sekundärluft mittels der Sekundärluftleitung unter Umgehung der oder vorzugsweise aller Brennräume der Verbrennungskraftmaschine in den Abgastrakt eingeleitet, das heißt eingeblasen. Hierunter ist zu verstehen, dass die Sekundärluft nicht etwa über einen der Brennräume in den Abgastrakt gelangt, sondern die Sekundärluft strömt auf ihrem Weg durch die Sekundärluftleitung in den Abgastrakt nicht durch die Brennräume der Verbrennungskraftmaschine, mithin umgeht die Sekundärluft die beziehungsweise alle Brennräume der Verbrennungskraftmaschine. Wieder mit anderen Worten ausgedrückt wird die Sekundärluft mittels der Sekundärluftleitung direkt in den Abgastrakt eingeleitet, das heißt eingeblasen. Insbesondere ist mittels der Sekundärluftleitung die die Sekundärluftleitung in die Einblasrichtung durchströmende Sekundärluft an wenigstens oder genau einer Einleitstelle in den Abgastrakt, insbesondere direkt, einleitbar. Dabei ist die Einleitstelle insbesondere stromab der beziehungsweise aller Brennräume der Verbrennungskraftmaschine angeordnet, und beispielsweise ist die Einleitstelle in einem Zylinderkopf der Verbrennungskraftmaschine angeordnet.

In dem Abgastrakt ist beispielsweise, insbesondere stromab der Einleitstelle, wenigstens ein Abgasnachbehandlungselement zum Nachbehandeln des Abgases angeordnet. Das Abgasnachbehandlungselement ist beispielsweise ein oder umfasst einen Katalysator. Die in den Abgastrakt eingebrachte, das heißt eingeleitete Sekundärluft wird insbesondere dazu verwendet, das Abgasnachbehandlungselement aufzuheizen, das heißt zu erwärmen. Hierfür kann beispielsweise ein Brennstoff, das heißt, es können unverbrannte Kohlenwasserstoffe in dem Abgastrakt mit aus der Sekundärluft stammendem Sauerstoff reagieren, wodurch der Brennstoff insbesondere unter Freisetzung von Wärme verbrannt wird. Mittels der freigesetzten Wärme kann das Abgasnachbehandlungselement effektiv und insbesondere besonders schnell aufgeheizt werden.

Die Sekundärluft stammt beispielsweise aus einem auch als Einlasstrakt bezeichneten Ansaugtrakt der Verbrennungskraftmaschine. Der Ansaugtrakt ist von Luft durchströmbar, welche auch als Frischluft bezeichnet wird. Mittels des Ansaugtrakts wird die Frischluft zu den und in die Brennräume geleitet. Dabei kann beispielsweise, insbesondere mittels der Sekundärluftleitung, zumindest ein Teil der den Ansaugtrakt durchströmenden Frischluft aus dem Ansaugtrakt abgezweigt und in die Sekundärluftleitung eingeleitet werden. Der in die Sekundärluft eingeleitete Teil der Frischluft kann die Sekundärluftleitung als die zuvor genannte Sekundärluft durchströmen und wird in der Folge mittels der Sekundärluftleitung in den Abgastrakt, insbesondere direkt, eingeleitet. Insbesondere kann das Sekundärluftsystem eine einfach auch als Pumpe bezeichnete Luftpumpe aufweisen, mittels welcher die Sekundärluft durch die Sekundärluftleitung hindurchgefördert werden kann.

Das Sekundärluftsystem weist auch wenigstens ein in der Sekundärluftleitung angeordnetes und somit von der Sekundärluft, insbesondere die Einblasrichtung, durchströmbares Ventilelement auf, welches entlang der Einblasrichtung einen ersten Strömungswiderstand, insbesondere für ein Gas wie beispielsweise die Sekundärluft, einen ersten Strömungswiderstand aufweist. Entlang einer der Einblasrichtung entgegengesetzte Rückströmrichtung weist das Ventilelement, insbesondere für das Gas, einen zweiten Strömungswiderstand auf, welcher, insbesondere signifikant, größer als der erste Strömungswiderstand ist. Hierdurch kann das Ventilelement ein in die Rückströmrichtung erfolgendes Rückströmen, insbesondere des Gases, zumindest begrenzen, insbesondere verhindern. Das Ventilelement ist somit ein Rückflussbegrenzer oder ein Rückflussverhinderer, da das Ventilelement eine insbesondere unerwünschte Rückströmung, beispielsweise des Gases, durch die beziehungsweise in der Sekundärluftleitung verhindert.

Wie zuvor erwähnt, kann es sich bei dem genannten Gas um die Sekundärluft handeln. Somit stellt das Ventilelement beispielsweise für die Sekundärluft entlang der Einblasrichtung betrachtet den ersten Strömungswiderstand und entlang der Rückströmrichtung betrachtet dem zweiten Strömungswiderstand bereit. Ferner kann es sich bei dem Gas um das Abgas handeln. Mit anderen Worten, angenommen, das Abgas würde in die Einblasrichtung durch die Sekundärluftleitung hindurchgeleitet oder hindurchströmen, so würde das Ventilelement den ersten Strömungswiderstand für das die Sekundärluftleitung in die Einblasrichtung durchströmende Abgas aufweisen beziehungsweise bereitstellen. Entlang der Rückströmrichtung jedoch weist das Ventilelement den gegenüber dem ersten Strömungswiderstand größeren, zweiten Strömungswiderstand auf. Dies Sekundärluft und das Abgas sind hinsichtlich ihres Strömungsverhaltens und insbesondere bezüglich der Strömungswiderstände des Ventilelements als sehr ähnlich oder gleich anzusehen, so dass das Ventilelement einerseits zulässt, dass die Sekundärluft in die Einblasrichtung die Sekundärluftleitung und somit das Ventilelement durchströmt und somit, insbesondere direkt, in den Abgastrakt eingebracht wird. Andererseits verhindert oder unterbindet das Ventilelement, dass eine übermäßige Strömung des Abgases durch das Ventilelement und somit durch die Sekundärluftleitung in die der Einblasrichtung entgegengesetzte Rückströmrichtung erfolgt. Somit verhindert das Ventilelement ein Einströmen einer übermäßigen Menge des Abgases aus dem Abgastrakt in die Sekundärluftleitung und/oder ein übermäßig weites Vordringen des Abgases aus dem Abgastrakt in die Sekundärluftleitung. Beispielsweise ist hierfür das Ventilelement so ausgebildet, dass das Ventilelement dann, wenn das Gas wie beispielsweise die Sekundärluft und das Abgas in die Einblasrichtung durch das Ventilelement hindurchströmt oder hindurchströmen würde, einen ersten Druckverlust des Gases beziehungsweise dessen Strömung erzeugt. Ferner ist das Ventilelement beispielsweise so ausgebildet, dass das Ventilelement dann, wenn das Gas wie beispielsweise die Sekundärluft oder das Abgas in die Rückströmrichtung durch das Ventilelement hindurchströmt oder hindurchströmen würde oder, insbesondere aktiv und somit beispielsweise erzwungenermaßen, hindurchgeleitet wird oder würde, einen zweiten Druckverlust des Gases beziehungsweise dessen Strömung erzeugt, wobei der zweite Druckverlust, insbesondere signifikant, größer als der erste Druckverlust ist. Dadurch kann ein übermäßiges Einströmen beziehungsweise Rückströmen des Abgases in die beziehungsweise in der Sekundärluftleitung vermieden werden.

Um nun die Sekundärluft auf besonders vorteilhafte Weise mittels der Sekundärluftleitung und somit über das Ventilelement in den Abgastrakt einleiten, das heißt einbringen oder einblasen zu können, ist es erfindungsgemäß vorgesehen, dass das Ventilelement mehrere, entlang der oder in die Einblasrichtung aufeinanderfolgend und somit hintereinander angeordnete Prallkörper aufweist, wobei der jeweilige Prallkörper an sich, das heißt für sich alleine betrachtet, rotationssymmetrisch ausgebildet ist. Auf ihrem Weg durch die Sekundärluftleitung und dabei durch das Ventilelement hin zu dem Abgastrakt strömt somit die Sekundärluft zunächst einen ersten der Prallkörper an und um, woraufhin die Sekundärluft einen zweiten der Prallkörper anströmt und umströmt. Dabei ist der zweite Prallkörper in die Einblasrichtung betrachtet, das heißt entlang der Einblasrichtung, stromab des ersten Prallkörpers angeordnet. Die Prallkörper sind dabei miteinander verbunden, wodurch die Prallkörper eine an sich, das heißt für sich alleine betrachtet, zusammengebaute Baueinheit bilden, die in ihrem zusammengebauten Zustand somit als Ganzes beispielsweise von einer Person oder einem Roboter gehandhabt und somit beispielsweise montiert, das heißt verbaut werden kann. Insbesondere kann es sich bei der Baueinheit um das Ventilelement handeln.

Das Ventilelement und somit die Baueinheit sind in einem Längenbereich der Sekundärluftleitung angeordnet, wobei der Längenbereich durch ein separat von dem Ventilelement und somit separat von der Baueinheit ausgebildetes Bauelement der Verbrennungskraftmaschine begrenzt ist. Die Erfindung ermöglicht es, beispielsweise bei einer Herstellung der Verbrennungskraftmaschine, die Baueinheit und somit die mehreren Prallkörper und/oder eine Gruppe und/oder an Prallkörpern gleichzeitig handzuhaben und somit beispielsweise relativ zu dem Bauelement zu bewegen und zu verbauen, indem beispielsweise die Baueinheit in den Längenbereich hineinbewegt und somit in dem Längenbereich angeordnet wird.

Grundsätzlich ist es denkbar, dass die Prallkörper separat voneinander ausgebildete und miteinander verbundene Körper sind. Als besonders vorteilhaft hat es sich jedoch gezeigt, wenn die Prallkörper einstückig miteinander ausgebildet sind. Dies bedeutet, dass die Prallkörper integrale Bestandteile eines einstückigen, das heißt einstückig und somit integral hergestellten Körpers sind, wobei der Körper nicht etwa aus mehreren, separat voneinander ausgebildeten Bauteilen zusammengesetzt ist, sondern der Körper ist als ein Monoblock ausgebildet, durch welchen die Prallkörper gebildet sind.

Des Weiteren ist es vorzugsweise vorgesehen, dass das Ventilelement als ein passives Ventilelement ohne bewegliche Teile ausgebildet ist, wodurch eine übermäßige, unerwünschte Rückströmung insbesondere des Abgases in die oder in der Sekundärluftleitung vermieden werden kann.

Um die Sekundärluft besonders vorteilhaft in den Abgastrakt einbringen, insbesondere einblasen, zu können, ist es bei einer vorteilhaften Ausführungsform der Erfindung vorgesehen, dass das Bauelement der zuvor genannte Zylinderkopf der Verbrennungskraftmaschine ist. Dabei ist beispielsweise der jeweilige Brennraum teilweise durch ein jeweiliges Brennraumdach begrenzt, wobei das jeweilige Brennraumdach durch den Zylinderkopf gebildet ist.

Vorzugsweise ist der Längenbereich direkt durch das Bauelement, insbesondere durch eine innenumfangsseitige und somit insbesondere konkave Mantelfläche des Bauelements, begrenzt, wobei beispielsweise das Ventilelement, insbesondere eine außenumfangsseitige und somit beispielsweise konvexe Mantelfläche des Ventilelements, das Bauelement, insbesondere die innenumfangsseitige Mantelfläche, direkt berührt.

Eine weitere Ausführungsform zeichnet sich dadurch aus, dass zumindest ein den Längenbereich, insbesondere direkt, begrenzender Teil des Bauelements einstückig ausgebildet ist. Hierunter ist insbesondere zu verstehen, dass zumindest der Teil des Bauelements integral und somit einstückig hergestellt und somit als ein Monoblock ausgebildet ist, so dass der Teil des Bauelements nicht etwa aus mehreren, separat voneinander ausgebildeten und miteinander gebildeten Bauteilen zusammengesetzt ist. Hierdurch kann die Sekundärluft besonders einfach und insbesondere besonders kostengünstig in den Abgastrakt eingeleitet werden.

Um eine besonders vorteilhafte und insbesondere kostengünstige sowie effektive und effiziente Sekundärlufteinblasung realisieren zu können, ist es in weiterer Ausgestaltung der Erfindung vorgesehen, dass zumindest der Teil des Bauelements durch Gießen hergestellt und somit als Gussbauteil ausgebildet ist.

Bei einer weiteren, besonders vorteilhaften Ausführungsform der Erfindung weist der jeweilige Prallkörper einen jeweiligen, sich entlang der Einblasrichtung, das heißt in die Einblasrichtung betrachtet kontinuierlich erweiternden Bereich aufweist. Hierdurch kann der erste Strömungswiderstand vorteilhaft gering gehalten werden. Gleichzeitig kann der zweite Strömungswiderstand vorteilhaft groß ausgestaltet werden. Dadurch kann das Ventilelement einerseits besonders kompakt ausgestaltet werden, so dass das Ventilelement und somit die Sekundärluftleitung und auch die Einleitstelle besonders vorteilhaft positioniert werden können. Zum anderen kann eine unerwünschte Strömung des Abgases in die und/oder in der Sekundärluftleitung vermieden werden.

Das Ventilelement fungiert somit als Rückschlagventil oder als eine Art Rückschlagventil, jedoch vorzugsweise ohne bewegliche Bauteile. Dadurch kann eine besonders kompakte Bauweise des Ventilelements realisiert werden, so dass das Ventilelement und in der Folge die Sekundärluftleitung und ganz insbesondere die Einleitstelle vorteilhaft positioniert werden können. Dadurch kann eine besonders vorteilhafte Sekundärlufteinblasung dargestellt werden.

Um den jeweiligen Strömungswiderstand besonders vorteilhaft realisieren zu können, ist es in weiterer Ausgestaltung der Erfindung vorgesehen, dass der jeweilige, sich entlang der Einblasrichtung kontinuierlich erweiternde Bereich kegelförmig oder kegelstumpfförmig ausgebildet ist.

Der jeweilige, sich entlang der Einblasrichtung kontinuierlich erweiternde Bereich wird auch als erster Bereich bezeichnet.

Eine weitere Ausführungsform sieht vor, dass entlang der Einblasrichtung, das heißt in die Einblasrichtung betrachtet, auf den jeweiligen, ersten Bereich des jeweiligen Prallkörpers ein jeweiliger, zweiter Bereich des jeweiligen Prallkörpers folgt. Der jeweilige, zweite Bereich des jeweiligen Prallkörpers verjüngt sich entlang der Einblasrichtung, das heißt in die Einblasrichtung kontinuierlich. Dadurch können die Strömungswiderstände besonders vorteilhaft ausgestaltet werden, wobei gleichzeitig eine besonders kompakte Bauweise des Ventilelements dargestellt werden kann.

Dabei hat es sich als besonders vorteilhaft gezeigt, wenn der jeweilige, zweite Bereich kegelförmig oder kegelstumpfförmig ausgebildet ist. Hierdurch kann einerseits eine besonders vorteilhafte Strömung der Sekundärluft in die Einblasrichtung und somit hin zu dem Abgastrakt gewährleistet werden. Andererseits kann eine unerwünschte Rückströmung des Abgases in der Sekundärluftleitung vorteilhaft vermieden werden.

Um einerseits die Sekundärluft besonders gut in die Einblasrichtung durch die Sekundärluftleitung hindurchführen zu können, andererseits jedoch eine übermäßige Rückströmung des Abgases vermeiden zu können, bei gleichzeitiger Realisierung einer kompakten Bauweise des Ventilelements ist es in weiterer Ausgestaltung der Erfindung vorgesehen, dass der größte Außenumfang, insbesondere der größte Außendurchmesser, des jeweiligen, ersten Bereichs größer als der größte beziehungsweise maximale Außenumfang, insbesondere Außendurchmesser, des jeweiligen, zweiten Bereichs ist.

Ferner ist es denkbar, dass der jeweilige zweite Bereich über einen jeweiligen Übergangsbereich in den jeweiligen, ersten Bereich übergeht, wobei vorzugsweise der jeweilige Übergangsbereich in die Rückströmrichtung und somit entgegen der Einblasrichtung gewölbt ist. Insbesondere ist der Übergangsbereich ein Ringbereich, welcher sich in um die Einblasrichtung verlaufender Umfangsrichtung des jeweiligen Prallkörpers, insbesondere vollständig umlaufend, um den jeweiligen, zweiten Bereich herum erstreckt. Dadurch kann eine übermäßige Rückströmung von Abgas in der Sekundärluftleitung vorteilhaft vermieden werden.

Schließlich hat es sich als besonders vorteilhaft gezeigt, wenn dem jeweiligen Prallkörper ein jeweiliger Ring des Ventilelements zugeordnet ist, wobei der jeweilige Prallkörper in den dem jeweiligen Prallkörper zugeordneten Ring eingreift. Dabei sind die Ringe miteinander und mit den Prallkörpern verbunden, so dass vorzugsweise die Ringe Bestandteile der Baueinheit sind. Dabei ist es denkbar, dass die Ringe einstückig miteinander ausgebildet sind, so dass vorzugsweise die Ringe integrale Bestandteile eines Ringkörpers sind. Insbesondere ist es denkbar, dass die Ringe und somit der Ringkörper einstückig mit dem zuvor genannten Körper, mithin einstückig mit den Prallkörpern ausgebildet sind. Somit sind vorzugsweise sowohl die Ringe als auch die Prallkörper integrale Bestandteile des als Monoblock ausgebildeten, zuvor genannten Körpers, welcher integral und somit einstückig hergestellt und somit nicht aus mehreren, separat voneinander ausgebildeten und miteinander verbundenen Bauteilen zusammengesetzt ist. Dadurch kann eine besonders kompakte Bauweise des Ventilelements realisiert werden, so dass insbesondere die Einleitstelle vorteilhaft positioniert werden kann. In der Folge kann eine besonders vorteilhafte Sekundärlufteinblasung realisiert werden.

Beispielsweise ist die Verbrennungskraftmaschine ein Ottomotor. Insbesondere kann die Verbrennungskraftmaschine eine aufgeladene Verbrennungskraftmaschine sein.

Hierunter ist insbesondere zu verstehen, dass die Verbrennungskraftmaschine wenigstens einen Abgasturbolader aufweist, welcher einen im Ansaugtrakt angeordneten Verdichter und eine im Abgastrakt angeordnete Turbine aufweist. Die Turbine ist von dem Abgas antreibbar, wobei der Verdichter von der Turbine antreibbar ist. Durch Antreiben des Verdichters kann mittels des Verdichters die den Ansaugtrakt durchströmende Frischluft verdichtet werden.

Der Erfindung liegen insbesondere die folgenden Erkenntnisse und Überlegungen zugrunde. Die Sekundärlufteinblasung dient insbesondere in einem durch einen Abgasturbolader aufgeladenen Ottomotor dazu, beispielsweise nach einem Kaltstart der Verbrennungskraftmaschine eine Temperatur des Abgasnachbehandlungselements insbesondere durch Nachreaktion des Abgases beziehungsweise von im Abgas enthaltenen Bestandteilen besonders schnell auf eine vorteilhafte Betriebstemperatur zu bringen und damit eine übermäßige Emission unerwünschter Bestandteile zu vermeiden. Insbesondere kann es sich bei den genannten Bestandteilen um den Brennstoff, das heißt um unverbrannte Kohlenwasserstoffe handeln. Dem jeweiligen Brennraum ist beispielsweise wenigstens ein jeweiliger Auslasskanal zugeordnet, welcher insbesondere in dem genannten Zylinderkopf angeordnet ist. Insbesondere der jeweilige Auslasskanal, insbesondere direkt, durch den Zylinderkopf begrenzt. Dabei sind dem jeweiligen Brennraum wenigstens ein oder mehrere Auslassventile zugeordnet, welche relativ zu dem Zylinderkopf, insbesondere translatorisch, bewegbar sind. Über das jeweilige Auslassventil kann das jeweilige Abgas aus dem jeweiligen Brennraum ausströmen und in den jeweiligen Auslasskanal einströmen. Der Auslasskanal wird auch als Abgaskanal bezeichnet.

Als besonders effektiv hat es sich gezeigt, wenn die Sekundärluft unmittelbar nach dem jeweiligen Auslassventil oder nach den jeweiligen Auslassventilen in den jeweiligen Abgaskanal, insbesondere in jeden einzelnen Abgaskanal, eingeblasen wird. Insbesondere ist der jeweilige Abgaskanal beziehungsweise Auslasskanal Bestandteil des Abgastrakts. Eine Betriebsstrategie der Verbrennungskraftmaschine kann dabei vorsehen, auch in einem Betriebsstadium, in welchem Sekundärluft in den Abgastrakt eingeblasen wird, schon hohe Lasten und somit hohe Mitteldrücke bei niedrigen Drehzahlen zu fahren, um einen möglichst kraftstoffverbrauchsarmen Betrieb zu ermöglichen. Insbesondere ist der jeweilige Auslasskanal Bestandteil des Abgastrakts. Dabei kann es jedoch zu dem Problem kommen, dass ein Abgasgegendruck und speziell Auslassstöße des Abgases es sehr erschweren können, die Sekundärluft in genügender Menge in den jeweiligen Abgaskanal und somit in den Abgastrakt einblasen zu können. Reicht beispielsweise ein insbesondere durch die auch als Sekundärluftpumpe bezeichnete Luftpumpe bewirkter Druck der Sekundärluft nicht aus, so kommt es bei jedem Abgasstoß zu einem so großen Zurückströmen von Abgas in die Sekundärluftleitung und somit in einen durch die Sekundärluftleitung, insbesondere direkt, begrenzten Sekundärluftkanal, dass ein gemittelter Strom der Sekundärluft für eine hinreichende Reaktion in dem Abgastrakt und somit für ein hinreichendes Aufheizen des Abgasnachbehandlungselements nicht mehr ausreicht, falls keine entsprechende Gegenmaßnahme getroffen ist.

Eine mögliche Lösung des Problems ist, die Sekundärluftpumpe mit einer besonders hohen Leistung zu versehen, mithin eine besonders leistungsstarke Sekundärluftpumpe zu verwenden. Beispielsweise ist die Sekundärluftpumpe eine elektrische Sekundärluftpumpe, mithin elektrisch betreibbar. Daraus resultieren jedoch die Nachteile, dass eine Leistungsaufnahme der Sekundärluftpumpe dann sehr hoch ist, was zu einer zusätzlichen Belastung eines Bordnetzes des Kraftfahrzeugs führt. Außerdem müssen die Sekundärluftleitung und ein Sekundärluftventil, welches beispielsweise in der Sekundärluftleitung angeordnet und dazu ausgebildet ist, eine in den Abgastrakt einzuleitende Menge der Sekundärluft einzustellen, einem beziehungsweise dem höheren Druck der Sekundärluft standhalten, wodurch die Sekundärluftleitung und das Sekundärluftventil bauraum-, gewichts- und kostenintensiver werden. Insbesondere ist das Sekundärluftventil entlang der Einblasrichtung betrachtet stromauf des Ventilelements angeordnet.

Es wurde gefunden, dass Rückschlagventile in außerhalb des Zylinderkopfs verlaufenden Sekundärluft- beziehungsweise Sammelleitungen ein Rückströmen von Abgas insbesondere in Einblasekanäle der einzelnen Brennräume nicht ausreichend verhindern können. Auch lange Kanäle ermöglichen aufgrund der Kompressibilität der Sekundärluft ein unerwünschtes Eindringen von Abgas in die Sekundärluftleitung. Daher ist es von Vorteil, einen Rückstromverhinderer- oder -begrenzer wie beispielsweise das Ventilelement besonders nahe an dem jeweiligen Auslassventil oder an den jeweiligen Auslassventilen anzuordnen. Denkbar ist insbesondere, dass dem jeweiligen Brennraum oder jedem Brennraum wenigstens oder genau eine jeweilige Einleitstelle zugeordnet ist, an welcher die Sekundärluft in den Abgastrakt eingeleitet werden kann. Vorteilhaft dabei ist es insbesondere, wenn das beispielsweise als Rückstromverhinderer oder Rückstrombegrenzer ausgebildete Ventilelement besonders nahe an dem jeweiligen Auslassventil angeordnet ist. Somit ist es von Vorteil, das Ventilelement in dem Zylinderkopf anzuordnen. Jedoch ist der Bauraum in dem Zylinderkopf üblicherweise sehr begrenzt, so dass das Ventilelement besonders kompakt sein sollte. Dies kann nun durch die Erfindung realisiert werden. Das Ventilelement der erfindungsgemäßen Verbrennungskraftmaschine stellt somit eine Gegenmaßnahme dar, um ein übermäßiges Rückströmen von Abgas in die oder in der Sekundärluftleitung zu verhindern. Da durch die Erfindung eine besonders kompakte Bauweise des Ventilelements realisiert werden kann, kann das Ventilelement besonders nahe an beziehungsweise nach dem jeweiligen Auslassventil und dabei in dem Zylinderkopf angeordnet werden. Insbesondere kann ferner eine besonders große Anzahl der Prallkörper realisiert werden, so dass ein übermäßiges Rückströmen besonders gut vermieden werden kann.

Herkömmliche Kugelrückschlagventile scheiden zum Verhindern oder Begrenzen einer unerwünschten Rückströmung in oder in der Sekundärluftleitung aufgrund zu großer Massenträgheit aus. Selbst Zungen- oder Flatterventile sowie Plattenventile eignen sich nicht für den Einsatz in der Sekundärluftleitung, da es zu Lebensdauerproblemen kommen könnte. Sie sind außerdem einer Verschmutzung durch Rußpartikel aus der Verbrennung ausgesetzt, wenn das Abgas, zumindest kurzzeitig, in den Sekundärluftkanal beziehungsweise in die Sekundärluftleitung gelangt.

Im Vergleich zu herkömmlichen Lösungen ermöglicht nun die Erfindung einerseits eine besonders kompakte Bauweise des Ventilelements, so dass das Ventilelement besonders nahe an dem jeweiligen Auslassventil des jeweiligen Brennraums und dabei insbesondere in dem Zylinderkopf angeordnet werden kann. Dadurch kann einerseits eine vorteilhafte Sekundärlufteinblasung realisiert werden. Andererseits kann ein übermäßiges Rückströmen von Abgas in die und/oder in der Sekundärluftleitung vermieden werden.

Insbesondere kann das Ventilelement der erfindungsgemäßen Verbrennungskraftmaschine ein Tesla-Ventil oder nach Art eines Tesla-Ventils ausgebildet sein. Insbesondere ist es denkbar, dass der jeweilige Ring rotationssymmetrisch ist, insbesondere bezogen auf die gleiche Achse, bezüglich der auch der jeweilige Prallkörper rotationssymmetrisch ist. Das Ventilelement der erfindungsgemäßen Verbrennungskraftmaschine kann aufgrund seiner Kompaktheit in einer gegenüber herkömmlichen Lösungen nur leicht vergrößerten und beispielsweise als Bohrung ausgebildeten Sekundärluftaufnahme eingesetzt werden, die beispielsweise der zuvor genannte Längenbereich ist.

Insbesondere aufgrund der Kompaktheit des Ventilelements und der rotationssymmetrischen Ausgestaltung der Prallkörper ist es möglich, das Ventilelement sehr nahe an dem Auslasskanal beziehungsweise dem Auslassventil anzuordnen. Ein Volumen der Sekundärluft zwischen dem jeweiligen Auslassventil und dem Auslasskanal wird daher sehr klein. Dennoch kann eine hohe Anzahl der Prallkörper realisiert werden. Beispielsweise bilden der jeweilige Prallkörper und der jeweilige, dem jeweiligen Prallkörper zugeordnete Ring ein Ring-Prallkörper-Paar, wobei eine besonders hohe Anzahl der Ring-Prallkörper-Paare dargestellt werden kann. Dadurch kann eine besonders hohe Sperrwirkung realisiert werden, so dass eine übermäßige Rückströmung des Abgases in die und/oder in der Sekundärluftleitung vermieden werden kann. Es kann daher bei einem Abgasstoß nur eine geringe Menge des Abgases in die Sekundärluftleitung eintreten und somit einem Stoßausladeeffekt des Abgasturboladers beziehungsweise der Turbine verlorengehen. Außerdem kann leicht und ohne eine aufwendige, kosten- und gewichtsintensive Sekundärluftpumpe ein großer Massestrom der Sekundärluft in den Abgastrakt eingeblasen werden. Ein Heizeffekt zum Aufheizen des Abgasnachbehandlungselements verbessert sich dadurch im Vergleich zu herkömmlichen Lösungen, und die Zeit bis zur Erreichung einer nennenswerten Konvertierungsrate des Abgasnachbehandlungselements kann verkürzt werden. Hierdurch kann ein besonders emissionsarmer Betrieb der Verbrennungskraftmaschine realisiert werden. Außerdem dringt kaum noch Abgas in die Sekundärluftleitung ein, so dass in der Sekundärluftleitung übermäßige Verschmutzungen und Rußablagerungen verhindert werden können, die Querschnitten der Sekundärluftleitung über eine längere Betriebszeit zusetzen könnten.

Vorzugsweise weist das Sekundärluftsystem das zuvor genannte Sekundärluftventil auf, mittels welchem beispielsweise die Sekundärluftleitung, insbesondere vollständig, abgeschaltet, das heißt fluidisch versperrt werden kann. Insbesondere ermöglicht es das Sekundärluftventil, die Sekundärlufteinblasung insbesondere dadurch, dass mittels des Sekundärluftventils die Sekundärluftleitung, insbesondere vollständig, fluidisch versperrt wird, abzuschalten, da die Sekundärlufteinblasung in großen Teilen des Betriebs der Verbrennungskraftmaschine nicht benötigt wird. Durch das insbesondere vollständige, fluidische Versperren der Sekundärluftleitung mittels des Sekundärluftventils kann insbesondere bei hohen Lasten eine Rückströmung des Abgases und somit ein Entweichen des Abgases über das Sekundärluftsystem verhindert werden. Insbesondere ist das Sekundärluftventil ein Schaltventil. Entlang der Einblasrichtung betrachtet ist das Sekundärluftventil stromauf des Ventilelements und dabei insbesondere in der Sekundärluftleitung angeordnet. Da das Ventilelement der erfindungsgemäßen Verbrennungskraftmaschine eine besonders vorteilhafte Sperrwirkung aufweist, mithin ein übermäßiges Rückströmen von Abgas in die und in der Sekundärluftleitung verhindert, kann mittels des Ventilelements das Sekundärluftventil besonders vorteilhaft gegen die Verschmutzung und somit gegen Störungen und vorzeitigen Ausfall geschützt werden.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Seitenansicht eines Ventilelements eines Sekundärluftsystems für eine Verbrennungskraftmaschine eines Kraftfahrzeugs; und
- Fig. 2: eine schematische Längsschnittansicht des Ventilelements entlang einer in Fig. 1 mit A-A bezeichneten Schnittlinie;
- Fig. 3: eine schematische Draufsicht des Ventilelements; und
- Fig. 4: eine schematische Längsschnittansicht des Ventilelements gemäß einer in Fig. 3 mit B-B bezeichneten Schnittlinie;
- Fig. 5: ausschnittsweise eine schematische Schnittansicht der mit dem Sekundärluftsystem und dem Ventilelement ausgestatteten Verbrennungskraftmaschine; und
- Fig. 6: ausschnittsweise eine weitere schematische Schnittansicht der Verbrennungskraftmaschine.
In den Figuren sind gleiche oder funktionsgleiche Elemente mit gleichen Bezugszeichen versehen.

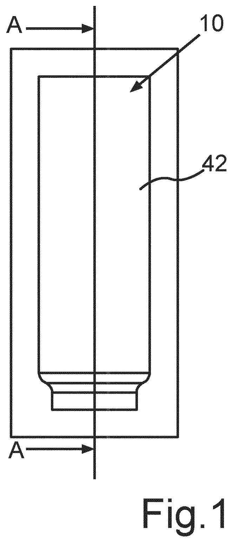

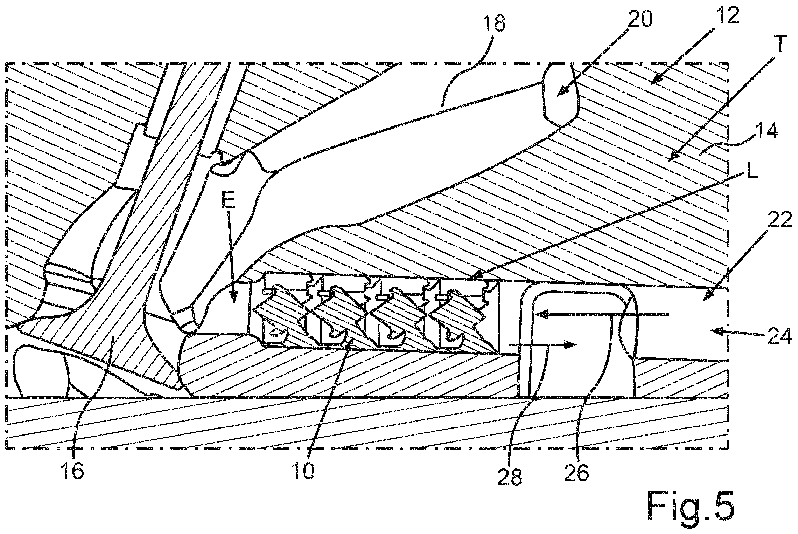

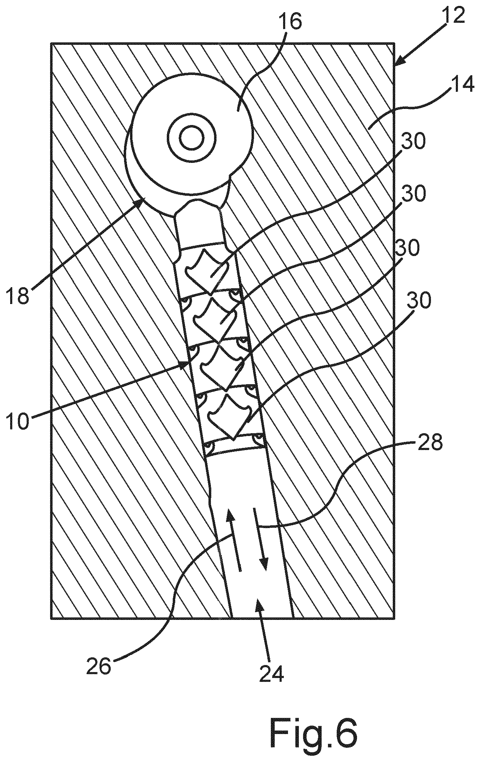

Fig. 1 zeigt in einer schematischen Seitenansicht ein Ventilelement 10 eines Sekundärluftsystems einer Verbrennungskraftmaschine für ein Kraftfahrzeug. Die Verbrennungskraftmaschine ist in Fig. 5 und 6 ausschnittsweise in einer jeweiligen, schematischen Schnittansicht gezeigt und mit 12 bezeichnet. Die Verbrennungskraftmaschine 12 weist einen von Abgas der Verbrennungskraftmaschine 12 durchströmbaren Abgastrakt und das Sekundärluftsystem auf. Insbesondere weist die Verbrennungskraftmaschine 12 mehrere Brennräume auf. Der jeweilige Brennraum ist beispielsweise teilweise durch einen jeweiligen Zylinder der Verbrennungskraftmaschine 12 begrenzt. Beispielsweise ist der jeweilige Zylinder durch ein Motorgehäuse der Verbrennungskraftmaschine 12 begrenzt. Das Motorgehäuse ist beispielsweise ein Zylindergehäuse, insbesondere ein Zylinderkurbelgehäuse. Die Verbrennungskraftmaschine 12 ist als ein Hubkolbenmotor ausgebildet. In dem jeweiligen Zylinder ist ein jeweiliger Kolben translatorisch bewegbar aufgenommen, so dass der jeweilige Brennraum teilweise durch den jeweiligen Zylinder und teilweise durch den jeweiligen, in dem jeweiligen Zylinder translatorisch bewegbar aufgenommenen Kolben begrenzt ist. Außerdem ist der jeweilige Brennraum durch ein jeweiliges Brennraumdach teilweise begrenzt. Das jeweilige Brennraumdach ist durch einen Zylinderkopf 14 der Verbrennungskraftmaschine 12 gebildet. Der Zylinderkopf 14 ist separat von dem Motorgehäuse ausgebildet und mit dem Motorgehäuse verbunden. Aus Fig. 5 ist erkennbar, dass dem jeweiligen Brennraum wenigstens ein Auslassventil 16 und wenigstens ein Auslasskanal 18 zugeordnet ist. Insbesondere sind in dem jeweiligen Brennraum wenigstens oder genau zwei Auslassventile 16 zugeordnet. Während eines befeuerten Betriebs der Verbrennungskraftmaschine 12 laufen in dem jeweiligen Brennraum Verbrennungsvorgänge ab. Bei dem jeweiligen Verbrennungsvorgang wird ein einfach auch als Gemisch bezeichnetes Kraftstoff-Luft-Gemisch verbrannt. Hieraus resultiert das zuvor genannte Abgas. Das Abgas kann aus dem jeweiligen Brennraum ausströmen und über das jeweilige, dem jeweiligen Brennraum zugeordnete Auslassventil 16 in den jeweiligen, dem jeweiligen Brennraum zugeordneten Auslasskanal 18 einströmen und in der Folge den jeweiligen Auslasskanal 18, welcher auch als Abgaskanal oder Abgasleitung bezeichnet wird, durchströmen. Der jeweilige Auslasskanal 18 ist Bestandteil des genannten Abgastrakts der Verbrennungskraftmaschine 12, deren Abgastrakt mit 20 bezeichnet ist. Es ist erkennbar, dass der jeweilige Auslasskanal 18 in dem Zylinderkopf 14 angeordnet ist. Dabei ist der jeweilige Auslasskanal 18, insbesondere direkt, durch den Zylinderkopf 14 gebildet, das heißt begrenzt.

Das in Fig. 5 und 6 ausschnittsweise erkennbare und dort mit 22 bezeichnete Sekundärluftsystem der Verbrennungskraftmaschine 12 weist, insbesondere je Brennraum, wenigstens oder genau eine Sekundärluftleitung 24 auf, welche von Luft als Sekundärluft in eine in Fig. 5 durch einen Pfeil 26 veranschaulichte Einblasrichtung durchströmbar ist. Hierdurch kann die die Sekundärluftleitung 24 in die Einblasrichtung (Pfeil 26) durchströmende Sekundärluft in den Auslasskanal 18 und somit in den Abgastrakt 20 eingeleitet werden. In dem Abgastrakt 20 ist stromab des Auslasskanals 18 wenigstens ersten Abgasnachbehandlungselement zum Nachbehandeln des Abgases angeordnet. Beispielsweise umfasst das Abgasnachbehandlungselement einen Katalysator. Mittels der Sekundärluft kann der Katalysator besonders schnell aufgeheizt und somit auf seine Betriebstemperatur gebracht werden. Das Einleiten der Sekundärluft in den Abgastrakt 20 wird auch als Einblasen der Sekundärluft oder als Sekundärlufteinblasung bezeichnet. Aus Fig. 5 ist erkennbar, dass die die Sekundärluftleitung 24 in die Einblasrichtung durchströmende Sekundärluft an einer Einleitstelle E aus der Sekundärluftleitung 24 ausströmen und in den Auslasskanal 18 und somit in den Abgastrakt 20 einströmen kann. Insbesondere mündet die Sekundärluftleitung 24 an der Einleitstelle E in den Auslasskanal 18 und somit in den Abgastrakt 20. Eine der Einblasrichtung entgegengesetzte Rückströmrichtung ist in Fig. 5 durch einen Pfeil 28 veranschaulicht.

Das Sekundärluftsystem 22 weist auch, insbesondere je Sekundärluftleitung 24, ein in der Sekundärluftleitung 24 angeordnetes Ventil auf, welches das in Fig. 1 gezeigte Ventilelement 10 ist. Das Ventilelement 10 weist entlang der Einblasrichtung einen ersten Strömungswiderstand, insbesondere für ein die Sekundärluftleitung 24 in die Einblasrichtung durchströmendes Gas, auf. Entlang der der Einblasrichtung entgegengesetzten Rückströmrichtung weist das Ventilelement 10, insbesondere für das die Sekundärluftleitung 24 in die Rückströmrichtung durchströmende Gas, einen zweiten Strömungswiderstand auf, welcher, insbesondere signifikant, größer als der erste Strömungswiderstand ist. Unter dem Gas kann beispielsweise sowohl die Sekundärluft als auch das Abgas verstanden werden. Strömt nun beispielsweise die Sekundärluft in die Einblasrichtung durch die Sekundärluftleitung 24 und somit durch das Ventilelement 10 hindurch, so weist das Ventilelement 10 für die Sekundärluft den ersten Strömungswiderstand auf. Würde beispielsweise die Sekundärluft in die Rückströmrichtung durch die Sekundärluftleitung 24 und somit durch das Ventilelement 10 hindurchströmen oder, insbesondere aktiv, hindurchgefördert werden, so weist dann das Ventilelement 10 für die die Sekundärluftleitung 24 in die Rückströmrichtung durchströmende Sekundärluft den zweiten Strömungswiderstand auf. Mit anderen Worten bewirkt das Ventilelement 10 dann, wenn das Gas, wie beispielsweise die Sekundärluft oder das Abgas, in die Einblasrichtung durch die Sekundärluftleitung 24 und somit durch das Ventilelement 10 hindurchströmt oder hindurchströmen würde, einen ersten Druckverlust des Gases. Beispielsweise bewirkt das Ventilelement 10 dann, wenn das Gas wie beispielsweise die Sekundärluft oder das Abgas in die Rückströmrichtung durch die Sekundärluftleitung 24 und somit durch das Ventilelement 10 hindurchströmt oder hindurchströmen würde, einen zweiten Druckverlust des Gases, wobei der zweite Druckverlust größer als der erste Druckverlust ist. Das Ventilelement 10 ist somit ein Rückflussverhinderer oder Rückflussbegrenzer, da mittels des Ventilelements 10 eine auch als Rückströmung bezeichnete und in die Rückströmrichtung erfolgende Strömung des Abgases in die Sekundärluftleitung 24 und/oder in der Sekundärluftleitung 24 zumindest begrenzt oder verhindert wird. Wieder mit anderen Worten ausgedrückt verhindert das Ventilelement 10 eine übermäßige Rückströmung des Abgases aus dem Abgastrakt 20 in die und/oder in der Sekundärluftleitung 24, so dass mittels des Ventilelements 10 beispielsweise vermieden werden kann, dass eine übermäßige Menge des Abgases aus dem Abgastrakt 20 in einen Leitungsbereich der Sekundärluftleitung 24 vordringt, deren Leitungsbereich entlang der Einblasrichtung betrachtet stromauf des Ventilelements 10 angeordnet ist.

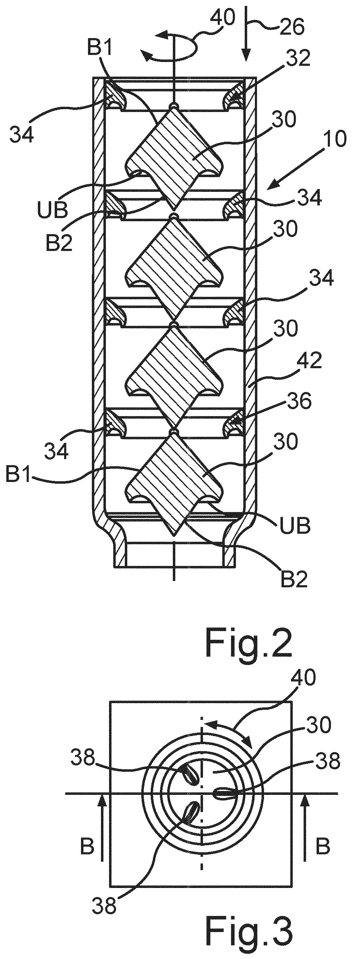

Um nun die Sekundärlufteinblasung besonders vorteilhaft durchführen zu können, weist das Ventilelement 10, wie besonders gut in Zusammenschau von Fig. 2 und 6 erkennbar ist, mehrere, entlang der Einblasrichtung aufeinanderfolgend angeordnete Prallkörper 30 auf. Der jeweilige Prallkörper 30 an sich ist rotationssymmetrisch ausgebildet. Die Prallkörper 30 sind miteinander verbunden, insbesondere derart, dass die Prallkörper 30 einstückig miteinander ausgebildet sind. Die miteinander verbundenen, insbesondere einstückig miteinander ausgebildeten Prallkörper 30 bilden somit eine zusammengebaute Baueinheit 32, welche beispielsweise das Ventilelement 10 sein kann oder ein Bestandteil des Ventilelements 10 sein kann.

Besonders gut aus Fig. 5 ist erkennbar, dass das Ventilelement 10 in einem Längenbereich L der Sekundärluftleitung 24 angeordnet ist, dessen Längenbereich L durch ein separat von dem Ventilelement 10 ausgebildetes Bauelement der Verbrennungskraftmaschine 12 begrenzt ist, wobei das Bauelement bei dem in den Figuren gezeigten Ausführungsbeispiel der Zylinderkopf 14 ist. Dies bedeutet, dass der Längenbereich L und somit das Ventilelement 10 in dem Zylinderkopf 14, das heißt innerhalb des Zylinderkopfes 14 angeordnet sind. Es kann eine besonders kompakte Bauweise des Ventilelements 10 realisiert werden, so dass das Ventilelement 10 in dem Zylinderkopf 14 angeordnet werden kann. Außerdem können hierdurch das Ventilelement 10 und somit die Einleitstelle E besonders nahe an dem jeweiligen Auslassventil 16 und dabei insbesondere stromab des Auslassventils 16 angeordnet werden, so dass eine besonders effiziente und effektive Sekundärlufteinblasung darstellbar ist.

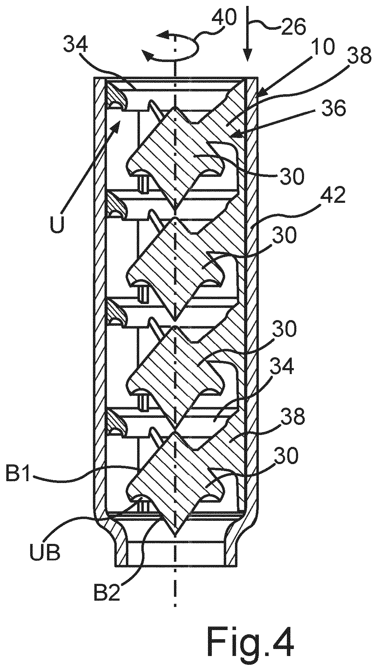

Besonders gut aus Fig. 2 und 4 ist erkennbar, dass dem jeweiligen Prallkörper 30, insbesondere genau, ein jeweiliger Ring 34 zugeordnet ist. Besonders gut aus Fig. 4 ist erkennbar, dass die Ringe 34 miteinander und mit den Prallkörpern 30 verbunden sind, insbesondere dadurch, dass die Ringe 34 einstückig miteinander ausgebildet und einstückig mit den Prallkörpern 30 ausgebildet sind. Die Ringe 34 und die Prallkörper 30 bilden somit einen einstückigen und somit als Monoblock ausgebildeten Körper 36, welcher die Baueinheit 32 sein kann. Mit anderen Worten ist der Körper 36 integral und somit einstückig hergestellt und nicht etwa durch mehrere, separat voneinander ausgebildete und somit miteinander verbundene Bauteile zusammengesetzt. Dabei sind sowohl die Ringe 34 als auch die Prallkörper 30 integrale Bestandteile des einstückigen und somit als Monoblock ausgebildeten Körpers 36. Außerdem ist aus Fig. 2 und 4 erkennbar, dass der jeweilige Prallkörper 30 in den jeweiligen, dem jeweiligen Prallkörper 30 zugeordneten Ring 34 eingreift. Vorliegend sind die Prallkörper 30 mit den Ringen 34 und miteinander über jeweilige Stege 38 verbunden, welche einstückig mit den Ringen 34 und einstückig mit den Prallkörpern 30 ausgebildet und somit ebenfalls Bestandteile des Körpers 36 sind. Beispielsweise sind je Prallkörper 30 wenigstens zwei, insbesondere wenigstens oder genau drei, dem jeweiligen Prallkörper 30 zugeordnete Stege 38 vorgesehen. Insbesondere kann vorgesehen sein, dass die jeweiligen, dem jeweiligen Prallkörper 30 zugeordneten Stege 38 in um die Einblasrichtung verlaufender Umfangsrichtung des jeweiligen Prallkörpers 30 gleichmäßig verteilt angeordnet und somit beispielsweise paarweise um 120° voneinander beabstandet sind. Insgesamt ist erkennbar, dass die Prallkörper 30 und die Ringe 34 mittels der Stege 38 zu der auch als Ventileinheit bezeichneten Baueinheit 32, insbesondere zu dem Körper 36, zusammengefasst sind. Die Baueinheit 32 beziehungsweise das Ventilelement 10 insgesamt kann besonders einfach in den beispielsweise als Bohrung ausgebildeten Längenbereich L der Sekundärluftleitung 24 eingesteckt und dort beispielsweise gesichert werden.

Aus Fig. 6 ist besonders gut erkennbar, dass das Ventilelement 10 besonders nahe an dem Auslasskanal 18 angeordnet sein kann. Dadurch kann besonders vorteilhaft vermieden werden, dass eine übermäßige Menge des Abgases aus dem Abgastrakt 20 in die Sekundärluftleitung 24 eindringt. Besonders gut aus Fig. 3 ist erkennbar, dass die jeweiligen, dem jeweiligen Prallkörper 30 zugeordneten Stege 38 in Umfangsrichtung des jeweiligen Prallkörpers 30 gleichmäßig verteilt angeordnet sind, wobei die Umfangsrichtung in Fig. 3 durch einen Doppelpfeil 40 veranschaulicht ist.

Das Ventilelement 10 kann eine Hülse 42 aufweisen, in welcher beispielsweise der Körper 36 angeordnet sein kann. Insbesondere kann die Hülse 42 separat von dem Körper 36 ausgebildet und mit dem Körper 36 verbunden sein, so dass die Hülse 42 Bestandteil der Baueinheit 32 sein kann. Die Hülse 42 könnte jedoch entfallen.

Bei dem in den Figuren gezeigten Ausführungsbeispiel ist zumindest ein den Längenbereich L, insbesondere direkt, begrenzender Teil T des Zylinderkopfes 14 einstückig ausgebildet und dabei beispielsweise durch Gießen hergestellt. Insbesondere ist es denkbar, dass der Zylinderkopf 14 insgesamt einstückig ausgebildet und beispielsweise durch Gießen hergestellt ist.

Wie besonders gut aus Fig. 2 und 4 erkennbar ist, weist der jeweilige Prallkörper 30 einen jeweiligen, ersten Bereich B1 auf, welcher sich entlang der Einblasrichtung kontinuierlich erweitert und dabei kegelförmig oder kegelstumpfförmig ausgebildet ist. Entlang der Einblasrichtung folgt auf den jeweiligen, ersten Bereich B1 des jeweiligen Prallkörpers 30 ein jeweiliger zweite Bereich B2 des jeweiligen Prallkörpers 30. Der jeweilige, zweite Bereich B2 des jeweiligen Prallkörpers 30 verjüngt sich entlang der Einblasrichtung kontinuierlich, wobei der jeweilige, zweite Bereich B2 kegelförmig oder kegelstumpfförmig ausgebildet ist. Außerdem ist der größte Außenumfang, insbesondere Außendurchmesser, des jeweiligen, ersten Bereichs B1 des jeweiligen Prallkörpers 30 größer als der größte Außenumfang, insbesondere Außendurchmesser, des jeweiligen, zweiten Bereichs B2 des jeweiligen Prallkörpers 30. Der jeweilige, zweite Bereich B2 geht über einen jeweiligen Übergangsbereich UB des jeweiligen Prallkörpers 30 in den jeweiligen, ersten Bereich B1 über beziehungsweise umgekehrt. Dabei ist beispielsweise der jeweilige Übergangsbereich UB entlang der Rückströmrichtung gewölbt, wobei sich beispielsweise der jeweilige Übergangsbereich UB in um die Rückströmrichtung beziehungsweise Einblasrichtung verlaufender Umfangsrichtung des jeweiligen Prallkörpers 30 vollständig umlaufend um den jeweiligen, zweiten Bereich B2 herumerstreckt. Der jeweilige Ring 34 ist auf einer jeweiligen, in Einblasrichtung dem jeweils zugeordneten Prallkörper 30 zugewandten Unterseite U gewölbt ausgebildet, und zwar entlang der Rückströmrichtung und somit entgegen der Einblasrichtung gewölbt.

## Patentansprüche

1. Verbrennungskraftmaschine (12) für ein Kraftfahrzeug, mit einem von Abgas der Verbrennungskraftmaschine (12) durchströmbaren Abgastrakt (20), und mit einem Sekundärluftsystem (22), welches aufweist:
- eine Sekundärluftleitung (24), welche von Luft als Sekundärluft in eine Einblasrichtung (26) durchströmbar ist, wodurch die die Sekundärluftleitung (24) in die Einblasrichtung (26) durchströmende Sekundärluft in den Abgastrakt (20) einleitbar ist, und
- wenigstens ein in der Sekundärluftleitung (24) angeordnetes Ventilelement (10), welches entlang der Einblasrichtung (26) einen ersten Strömungswiderstand und entlang einer der Einblasrichtung (26) entgegengesetzte Rückströmrichtung (28) einen gegenüber dem ersten Strömungswiderstand größeren, zweiten Strömungswiderstand aufweist, wodurch ein in die Rückströmrichtung (28) erfolgendes Rückströmen zumindest begrenzbar ist,
**dadurch gekennzeichnet, dass**
das Ventilelement (10) mehrere, entlang der Einblasrichtung (26) aufeinanderfolgend angeordnete, rotationssymmetrische Prallkörper (30) aufweist, welche miteinander verbunden sind und dadurch eine Baueinheit (32) bilden,
wobei das Ventilelement (10) und somit die Baueinheit (32) in einem Längenbereich (L) der Sekundärluftleitung (24) angeordnet sind, deren Längenbereich (L) durch ein separat von dem Ventilelement (10) und separat von der Baueinheit (32) ausgebildetes Bauelement (14) der Verbrennungskraftmaschine (12) begrenzt ist.

2. Verbrennungskraftmaschine (12) nach Anspruch 1,
**dadurch gekennzeichnet, dass**
das Bauelement (14) ein Zylinderkopf (14) der Verbrennungskraftmaschine (12) ist.

3. Verbrennungskraftmaschine (12) nach Anspruch 1 oder 2,
**dadurch gekennzeichnet, dass**
zumindest ein den Längenbereich (L) begrenzender Teil (T) des Bauelements (14) einstückig ausgebildet ist.

4. Verbrennungskraftmaschine (12) nach Anspruch 3,
**dadurch gekennzeichnet, dass**
zumindest der Teil (T) des Bauelements (14) durch Gießen hergestellt ist.

5. Verbrennungskraftmaschine (12) nach einem der vorhergehenden Ansprüche,
**dadurch gekennzeichnet, dass**
der jeweilige Prallkörper (30) einen jeweiligen, sich entlang der Einblasrichtung (26) kontinuierlich erweiternden Bereich (B1) aufweist.

6. Verbrennungskraftmaschine (12) nach Anspruch 5,
**dadurch gekennzeichnet, dass**
der jeweilige Bereich (N1) kegelförmig oder kegelstumpfförmig ausgebildet ist.

7. Verbrennungskraftmaschine (12) nach Anspruch 5 oder 6,
**dadurch gekennzeichnet, dass**
entlang der Einblasrichtung (26) auf den jeweiligen Bereich (B1) ein jeweiliger, zweiter Bereich (B2) des jeweiligen Prallkörpers (30) folgt, dessen jeweiliger, zweiter Bereich (B2) sich entlang der Einblasrichtung (26) kontinuierlich verjüngt.

8. Verbrennungskraftmaschine (12) nach Anspruch 6,
**dadurch gekennzeichnet, dass**
der jeweilige, zweite Bereich (B2) kegelförmig oder kegelstumpfförmig ausgebildet ist.

9. Verbrennungskraftmaschine (12) nach Anspruch 7 oder 8,
**dadurch gekennzeichnet, dass**
der größte Außenumfang des jeweiligen, ersten Bereiches (B1) größer als der größte Außenumfang des jeweiligen, zweiten Bereiches (B2) ist.

10. Verbrennungskraftmaschine (12) nach einem der vorhergehenden Ansprüche,
**dadurch gekennzeichnet, dass**
dem jeweiligen Prallkörper (30) ein jeweiliger Ring (34) des Ventilelements (10) zugeordnet ist, wobei der jeweilige Prallkörper (30) in den jeweiligen, dem jeweiligen Prallkörper (30) zugeordneten Ring (34) eingreift, wobei die Ringe (34) miteinander und mit den Prallkörpern (30) verbunden sind.

## Claims

1. Internal combustion engine (12) for a motor vehicle, comprising an exhaust tract (20) through which exhaust gas from the internal combustion engine (12) can flow, and comprising a secondary air system (22) having:
- a secondary air line (24) through which air can flow in an injection direction (26) as secondary air, whereby the secondary air flowing through the secondary air line (24) in the injection direction (26) can be introduced into the exhaust tract (20), and
- at least one valve element (10) arranged in the secondary air line (24), which valve element has a first flow resistance along the injection direction (26) and a second flow resistance that is greater than the first flow resistance along a return flow direction (28) opposite to the injection direction (26), whereby a return flow in the return flow direction (28) can be at least limited,
**characterized in that**
the valve element (10) comprises a plurality of rotationally symmetrical impact bodies (30) arranged successively along the injection direction (26), which are connected to one another and thereby form a structural unit (32), the valve element (10) and thus the structural unit (32) being arranged in a longitudinal region (L) of the secondary air line (24), the longitudinal region (L) of which is delimited by a component (14) of the internal combustion engine (12) that is formed separately from the valve element (10) and separately from the structural unit (32).

2. Internal combustion engine (12) according to claim 1,
**characterized in that**
the component (14) is a cylinder head (14) of the internal combustion engine (12).

3. Internal combustion engine (12) according to claim 1 or claim 2,
**characterized in that**
at least one part (T) of the component (14) that delimits the longitudinal region (L) is formed in one piece.

4. Internal combustion engine (12) according to claim 3,
**characterized in that**
at least the part (T) of the component (14) is produced by casting.

5. Internal combustion engine (12) according to any of the preceding claims,
**characterized in that**
the relevant impact body (30) comprises a relevant region (B1) which continuously widens along the injection direction (26).

6. Internal combustion engine (12) according to claim 5,
**characterized in that**
the relevant region (N1) is conical or frustoconical.

7. Internal combustion engine (12) according to claim 5 or claim 6,
**characterized in that**
along the injection direction (26), the relevant region (B1) is followed by a relevant second region (B2) of the relevant impact body (30), the relevant second region (B2) of which tapers continuously along the injection direction (26).

8. Internal combustion engine (12) according to claim 6,
**characterized in that**
the relevant second region (B2) is conical or frustoconical.

9. Internal combustion engine (12) according to claim 7 or claim 8,
**characterized in that**
the largest outer circumference of the relevant first region (B1) is larger than the largest outer circumference of the relevant second region (B2).

10. Internal combustion engine (12) according to any of the preceding claims,
**characterized in that**
a relevant ring (34) of the valve element (10) is associated with the relevant impact body (30), the relevant impact body (30) engaging in the relevant ring (34) associated with the relevant impact body (30), the rings (34) being connected to one another and to the impact bodies (30).

## Revendications

1. Moteur à combustion interne (12) pour un véhicule automobile, comportant un conduit de gaz d'échappement (20) pouvant être traversé par des gaz d'échappement du moteur à combustion interne (12), et comportant un système d'air secondaire (22) présentant :
- une conduite d'air secondaire (24) pouvant être traversée par de l'air en tant qu'air secondaire dans une direction d'injection (26), moyennant quoi l'air secondaire traversant la conduite d'air secondaire (24) dans la direction d'injection (26) peut être introduit dans le conduit de gaz d'échappement (20), et
- au moins un élément formant soupape (10) disposé dans la conduite d'air secondaire (24), lequel élément formant soupape présente une première résistance à l'écoulement le long de la direction d'injection (26) et une seconde résistance à l'écoulement plus grande que la première résistance à l'écoulement le long d'une direction de reflux (28) opposée à la direction d'injection (26), moyennant quoi un reflux se produisant dans la direction de reflux (28) peut au moins être délimité,
**caractérisé en ce que**
l'élément formant soupape (10) présente plusieurs corps d'impact (30) à symétrie de révolution, disposés les uns à la suite des autres le long de la direction d'injection (26), lesquels corps d'impact sont reliés les uns aux autres et forment ainsi une unité structurale (32), dans lequel l'élément formant soupape (10), et ainsi l'unité structurale (32), sont disposés dans une zone de longueur (L) de la conduite d'air secondaire (24) dont la zone de longueur (L) est délimitée par un élément structural (14) du moteur à combustion interne (12) réalisé séparément de l'élément formant soupape (10) et séparément de l'unité structurale (32).

2. Moteur à combustion interne (12) selon la revendication 1,
**caractérisé en ce que**
l'élément structural (14) est une culasse de cylindre (14) du moteur à combustion interne (12).

3. Moteur à combustion interne (12) selon la revendication 1 ou 2,
**caractérisé en ce que**
au moins une partie (T) de l'élément structural (14) délimitant la zone de longueur (L) est réalisée d'une seule pièce.

4. Moteur à combustion interne (12) selon la revendication 3,
**caractérisé en ce que**
au moins la partie (T) de l'élément structural (14) est fabriquée par coulée.

5. Moteur à combustion interne (12) selon l'une des revendications précédentes,
**caractérisé en ce que**
le corps d'impact (30) respectif présente une zone (B1) respective s'élargissant en continu le long de la direction d'injection (26).

6. Moteur à combustion interne (12) selon la revendication 5,
**caractérisé en ce que**
la zone (N1) respective est réalisée en forme conique ou tronconique.

7. Moteur à combustion interne (12) selon la revendication 5 ou 6,
**caractérisé en ce que**
le long de la direction d'injection (26), la zone (B1) respective est suivie d'une seconde zone (B2) respective du corps d'impact (30) respectif, dont la seconde zone (B2) respective se rétrécit en continu le long de la direction d'injection (26).

8. Moteur à combustion interne (12) selon la revendication 6,
**caractérisé en ce que**
la seconde zone (B2) respective est réalisée en forme conique ou tronconique.

9. Moteur à combustion interne (12) selon la revendication 7 ou 8,
**caractérisé en ce que**
la plus grande circonférence extérieure de la première zone (B1) respective est supérieure à la plus grande circonférence extérieure de la seconde zone (B2) respective.

10. Moteur à combustion interne (12) selon l'une des revendications précédentes,
**caractérisé en ce que**
une bague (34) respective de l'élément formant soupape (10) est associée au corps d'impact (30) respectif, dans lequel le corps d'impact (30) respectif vient en prise dans la bague (34) respective associée au corps d'impact (30) respectif, dans lequel les bagues (34) sont reliées entre elles et aux corps d'impact (30).
